# EUROPÄISCHE PATENTANMELDUNG

(11) **EP 4 800 662 A1**
(43) Veröffentlichungstag der Anmeldung: **02.09.2026**
(21) Anmeldenummer: 26160408.6
(22) Anmeldetag: 24.02.2026
(51) Int. Cl.: G06V 10/98, G06V 40/50, G06V 40/16

(54) **VERFAHREN UND VORRICHTUNG ZUM BESTIMMEN VON BILDDATEN FÜR EIN DIGITALES BIOMETRISCHES BILD**

(30) Priorität: 26.02.2025 DE 102025000809
(71) Anmelder: Bundesdruckerei GmbH, 10969 Berlin (DE)
(72) Erfinder: Szegvari, Piotr, 10969 Berlin (DE)

(57) **Zusammenfassung**

Die Erfindung betrifft ein computerimplementiertes Verfahren zum Erzeugen von Bilddaten für ein digitales biometrisches Bild, insbesondere für ein Passbild für ein Sicherheits- und/oder Wertdokument (102) sowie eine Bilderzeugungsvorrichtung (103) zum Bestimmen von Bilddaten, die ein digitales biometrisches Bild für ein Wert- und/oder Sicherheitsdokument repräsentieren. Um den Aufwand der Erzeugung von Bilddaten und somit die Hardwareanforderungen zu reduzieren, werden gemäß der Erfindung Auswahlbilddaten erst gespeichert und geprüft, nachdem eine Eignung von digitalen Bildern anhand von Prüfbilddaten mit reduzierter Auflösung bestimmt wurde.

## Beschreibung

Die Erfindung betrifft ein Verfahren und eine Vorrichtung zum Bestimmen von Bilddaten für ein digitales biometrisches Bild sowie ein Verfahren zum Personalisieren eines Sicherheitsdokuments.

Personen können mittels dafür entwickelter Vorrichtungen anhand von biometrischen Merkmalen identifiziert werden. Dies geschieht insbesondere auf Grundlage von biometrischen Merkmalen des Gesichtes. Biometrische Merkmale sind z.B. in Sicherheitsdokumenten wie beispielsweise Ausweisen oder Pässen mit biometrischen Passbildern hinterlegt. Mittels eines biometrischen Passbildes ist das Sicherheitsdokument personalisiert und ermöglicht ein Identifizieren der Person.

Soweit vorliegend die Begriffe "personalisiert" und "personalisierend" verwendet werden, so ist darunter die Eigenschaft eines Wert- oder Sicherheitsdokuments zu verstehen, der zufolge das Dokument einer bestimmten Person zuordenbar ist. Ein Wert- oder Sicherheitsdokument kann auch durch eine Vielzahl individualisierender Informationen personalisiert werden, wenn diese in Kombination die Zuordnung zu einer bestimmten Person erlauben.

Zum Bestimmen von Passbilddaten, die ein digitales biometrisches Passbild einer Person repräsentieren, werden üblicherweise Einzelbildaufnahmen einer Person mittels einer Kameravorrichtung erfasst. Wird nach einer erfolgten Bildaufnahme festgestellt, dass ein oder mehrere Eignungskriterien für die Eignung als biometrisches Passbild nicht erfüllt sind, können weitere Einzelbildaufnahmen folgen.

Mit dem Dokument EP 1 413 972 A1 wird ein Prüfverfahren für digitale Personenaufnahmen bereitgestellt, sowie Vorrichtungen zur Durchführung des Verfahrens. Das Verfahren ist insbesondere zum Überprüfen der Eignung einer Personenaufnahme für eine Personenidentifizierung verwendbar. Es umfasst die Schritte: Segmentieren der Personenaufnahme in einen Hintergrundbereich und einen Kopf- oder Gesichtsbereich, Analysieren des Kopf- oder Gesichtsbereichs, um wenigstens einen Kennwert zu ermitteln, Vergleichen des wenigstens einen Kennwerts mit wenigstens einem vorbestimmten Schwellwert.

Die Dokumente DE 10 2013 203 433 A1 und US 2016 / 012279 A1 betreffen eine Vorrichtung zur Erfassung personenspezifischer Daten einer Person, wobei die personenspezifischen Daten ein Gesichtsbild der Person umfassen. Die Vorrichtung weist eine Kamera zur Aufnahme des Gesichtsbildes der Person, eine Beleuchtungseinrichtung und einen semi-transparenten Spiegel auf. Der semitransparente Spiegel ist zwischen der Person und der Kamera angeordnet ist, wobei der semi-transparente Spiegel so ausgerichtet ist, dass auf der der Person zugewandten Seite des semi-transparenten Spiegels der Strahlengang von auf den semi-transparenten Spiegel einfallendem Licht parallel ist zum Strahlengang des vom semi-transparenten Spiegel zurück reflektierten Teil dieses Lichts. Die Beleuchtungseinrichtung ist für eine frontseitige Beleuchtung der Person ausgebildet. Die Vorrichtung weist ferner eine Steuerungseinheit auf zur Durchführung einer Bilderfassung durch Erzeugung von Licht durch die Beleuchtungseinrichtung zur Beleuchtung des Gesichts der Person und während der Beleuchtung Erfassen eines ersten Bildes des Gesichts der Person durch die Kamera, Erfassen eines zweiten Bildes des Gesichts der Person durch die Kamera ohne die Erzeugung des Lichts, Bildung eines ersten Differenzbildes des ersten Bildes und des zweiten Bildes, wobei im ersten Differenzbild das Gesicht der Person vom Hintergrund freigestellt ist, wobei die personenspezifischen Daten das erste Differenzbild als das Gesichtsbild umfassen.

In den Dokumenten US 2013 / 215275 A1 und US 2016 / 154991 A1 ist ein biometrischer Identitätsregistrierungskiosk zum Sammeln persönlicher Daten beschrieben. Die Vorrichtung umfasst ein verschiebbares Hauptmodul und mindestens einen modifizierbaren Abschnitt, der lösbar mit dem Hauptmodul gekoppelt ist. Das Hauptmodul umfasst einen Prozessor und eine oder mehrere mit dem Prozessor gekoppelte biometrische Erfassungsvorrichtungen, die eine Gesichtskamera umfassen können.

Das Dokument US 2019 / 082100 A1 beschreibt ein Verfahren zur Aufnahme eines Fotos zur Verwendung in einem Lichtbildausweis. Das Verfahren umfasst die Verwendung eines digitalen Bilderfassungssystems mit einer Digitalkamera, einem Computerprozessor und einem Speicher zum Speichern von Anforderungen für einen Fotodruck, um die Konformität zur Verwendung in einem vom Benutzer ausgewählten Lichtbildausweis, z. B. einem Reisepass für ein ausgewähltes Land oder eine ausgewählte Gerichtsbarkeit sicherzustellen. Zur automatischen Erkennung eines Gesichts und Gesichtsmerkmalspunkten auf dem Gesichtsbild finden Gesichtsbildverarbeitungstechniken Anwendung. Das Gesichtsbild wir verarbeitet und ein visueller Hinweis auf die Einhaltung der Anforderungen wird erzeugt. Bei Einhaltung wird das Foto auf der Grundlage des konformen Gesichtsbilds erzeugt.

Das Dokument DE 10 2021 114402 A1 offenbart ein Verfahren zur Bestimmung eines digitalen biometrischen Passbilds für ein Sicherheitsdokument, bei dem digitalen Bilddaten mit einer Aufnahmeauflösung und digitalen Bilddaten mit einer gegenüber der Aufnahmeauflösung verminderten Auflösung gespeichert werden, um anschließend mittels Prüfung der digitalen Bilddaten mit verminderter Auflösung zunächst anhand erster Eignungskriterien eine Vorauswahl von Porträtbildern zu treffen und diese Vorauswahl anschließend mittels zweiter Eignungskriterien auf ihre Eignung hin zu überprüfen.

Aufgrund großer Bilddaten wird eine hohe Datenrate im System benötigt, die nicht immer gegeben ist und oftmals aufgrund der begrenzten Ressourcen auch nicht gewährleistet werden kann. Dies kann zu einem Einbruch der Datenrate und der damit zu verarbeitenden Bilder pro Sekunde führen. Wird zusätzlich ein Bilddatenstrom mit geringer Datenrate verarbeitet, wird eine Art Synchronisation zwischen diesen zwei unterschiedlichen Datenströmen benötigt, um die Ergebnisse aus der Analyse basierend auf dem Bilddatenstrom mit geringer Auflösung in Verbindung mit den Bildern der hohen Auflösung nutzen zu können. Dadurch, dass beide Bilddatenströme mit unterschiedlich vielen Bildern pro Sekunde verarbeitet werden, muss die Verzögerung des hochauflösenden Bilddatenstroms kompensiert werden, damit wirklich passende Bilder gemeinsam verarbeitet werden können.

Nachteilig an bekannten Verfahren zum Bestimmen von Bilddaten für ein digitales biometrisches Bild ist der mit der Bestimmung geeigneter Bilddaten verbundene Aufwand, der zu erhöhten Hardwareanforderungen führt und lange Reaktionszeiten zur Folge haben kann.

Es ist daher eine Aufgabe der vorliegenden Erfindung, ein Verfahren und eine Vorrichtung zum Bestimmen von Bilddaten für ein biometrisches Bild anzugeben, das den Aufwand für die Bestimmung der Bilddaten verringert.

Die Aufgabe wird durch die Merkmale der unabhängigen Patentansprüche gelöst. Weitere vorteilhafte Ausführungsformen sind Gegenstand der Beschreibung, der Figuren sowie der abhängigen Patentansprüche.

Gemäß einem ersten Aspekt der Erfindung wird zunächst Mittels einer Bildaufnahmevorrichtung eine Folge von ersten digitalen Bildern einer Person mittels einer Bildaufnahmevorrichtung empfangen, wobei die ersten digitalen Bilder als Aufnahmebilddaten mit einer Aufnahmeauflösung empfangen werden. In einem nachfolgenden Schritt werden Prüfbilddaten mit einer gegenüber der Aufnahmeauflösung verminderten Prüfauflösung gespeichert. Die Prüfbilddaten basieren auf den Aufnahmebilddaten der ersten digitalen Bilder. Die Prüfbilddaten können Prüfbilder bilden, die Aufnahmebildern mit reduzierter Auflösung entsprechen. Die Prüfbilddaten erster digitaler Bilder werden ausgewählt, um die Prüfbilddaten dieser Bilder nach ersten Eignungskriterien hinsichtlich der Eignung für ein digitales biometrisches Bild zu prüfen, d.h. es wird bestimmt, ob die Prüfbilddaten, welche dem ausgewählten ersten digitalen Bild zugeordnet sind, die ersten Eignungskriterien erfüllen.

Sobald ein Prüfbild wenigstens einer vorbestimmten Teilmenge erster Eignungskriterien genügt, wird eine Folge von zweiten digitalen Bildern der Person mittels der Bildaufnahmevorrichtung in der Aufnahmeauflösung empfangen. Die Aufnahmebilddaten für die zweiten digitalen Bilder werden nun erneut als Prüfbilddaten mit der Prüfauflösung sowie zusätzlich als Auswahlbilddaten mit einer Auswahlauflösung gespeichert, wobei die Auswahlauflösung höher als die Prüfauflösung ist.

Es wird nun wenigstens eines der zweiten digitales Bilder der zweiten Folge von digitalen Bildern ausgewählt und bestimmt, ob die Prüfbilddaten, welche dem ausgewählten zweiten digitalen Bild zugeordnet sind, die ersten Eignungskriterien erfüllen. Ist dies der Fall, kann ein digitales biometrisches Bild ausgegeben oder mit der Prüfung der Eignung des wenigstens einen Bildes für ein digitales biometrisches Bild fortgefahren werden.

Ein Vorteil des erfindungsgemäßen Verfahrens ist, dass eine Verarbeitung hochauflösender Bilder in einer Auswahlauflösung erst begonnen wird, wenn anhand niedrig aufgelöster Prüfbilddaten erkannt wurde, dass Eignungskriterien erfüllt sind. So kann die Verarbeitung hochauflösender Bilder beispielsweise erst dann begonnen werden, wenn die Person vor der Bildaufnahmevorrichtung aufnahmebereit ist, die Lichtverhältnisse geeignet sind und/oder im Hintergrund keine anderen Personen mehr anwesend sind. Auf diese Weise wird der Aufwand für das Speichern und Verarbeiten von hochauflösenden Auswahlbilddaten so lange vermieden, bis die Wahrscheinlichkeit der Eignung nachfolgender Bilder deutlich erhöht ist.

Die erfindungsgemäße Lösung bewirkt eine erhebliche Verbesserung der Effizienz. Indem hochauflösende Bilder erst nach Auffinden eines geeigneten niedrigauflösenden Bildes geprüft werden, wird deutlich weniger Rechenzeit benötigt. Es können somit deutlich schlanker ausgelegte Computersysteme mit geringerer Rechenleistung Verwendung finden, ohne dass der Zeitbedarf der Prüfung zu einer merklichen Verzögerung führt.

Das Auswählen des zweiten digitalen Bildes der zweiten Folge von digitalen Bildern kann bevorzugt anhand der Auswahlbilddaten erfolgen. Dabei werden die dem ausgewählten zweiten digitalen Bild zugehörigen Prüfbilddaten vorzugsweise erst anschließend bestimmt. Dies hat den technischen Vorteil, dass die Prüfung der Prüfbilddaten hinsichtlich der Erfüllung der ersten Eignungskriterien auch nur dann erfolgt, wenn für die Erzeugung eines biometrischen Bildes benötigte Auswahlbilddaten vorhanden sind.

Gemäß einer bevorzugten Weiterbildung des Verfahrens kann, wenn die Prüfbilddaten, welche dem ausgewählten zweiten digitalen Bild zugeordnet sind, wenigstens eine notwendige Teilmenge der ersten Eignungskriterien erfüllen, das digitale biometrische Bild mit der Auswahlauflösung erzeugt und/oder ausgegeben werden. Dies kann insbesondere erfolgen, ohne dass eine weitere Prüfung des digitalen biometrischen Bildes erfolgt. Auf diese Weise wird vorteilhaft ein sehr einfaches Verfahren mit geringem Aufwand bei der Prüfung und Bearbeitung der Bilddaten bereitgestellt.

In weiteren Ausführungsvarianten kann, wenn die Prüfbilddaten, welche dem ausgewählten zweiten digitalen Bild zugeordnet sind, wenigstens eine notwendige Teilmenge der ersten Eignungskriterien erfüllen, bestimmt werden, ob die Prüfbilddaten, welche dem ausgewählten zweiten digitalen Bild zugeordnet sind, zweite Eignungskriterien erfüllen, die von den ersten Eignungskriterien verschieden sind. Erst falls die Prüfbilddaten zumindest eine notwendige Teilmenge der zweiten Eignungskriterien erfüllen, erfolgt in dieser Variante der Erfindung ein Erzeugen und/oder Ausgeben der Daten für das digitale biometrische Bild mit der Auswahlauflösung.

In bevorzugten Ausführungen des erfindungsgemäßen Verfahrens wird, wenn keine dem ausgewählten zweiten digitalen Bild zugehörigen Prüfbilddaten bestimmbar sind, ein weiteres zweites digitales Bild der zweiten Folge von digitalen Bildern anhand der Auswahlbilddaten ausgewählt und/oder empfangen wird. Das weitere zweite digitale Bild kann also bereits gespeichert sein oder zunächst aufgenommen werden. Anschließend können erneut zugehörige Prüfbilddaten bestimmt werden, um anhand der Prüfbilddaten die Erfüllung der Eignungskriterien zu prüfen.

Gemäß bevorzugten Weiterbildungen der Erfindung können die Prüfbilder mit einem Prüfbildzeitstempel und die Auswahlbilder jeweils mit einem Auswahlbildzeitstempel versehen werden. Somit kann das einem Auswahlbild zugeordnete Prüfbild bestimmt werden, indem die Prüfbildzeitstempel verfügbarer Prüfbilder mit dem Auswahlbildzeitstempel des Auswahlbildes verglichen und ein dem Auswahlbildzeitstempel entsprechender und/oder innerhalb eines Abweichungsbereiches vom Auswahlzeitstempel liegender Prüfbildzeitstempel bestimmt wird. Wird ein zugeordnetes Prüfbild aufgefunden, können die Prüfergebnisse hinsichtlich des Prüfbildes auf das Auswahlbild bezogen werden. Erfüllt das zugeordnete Prüfbild erste und/oder zweite Eignungskriterien, kann dem entsprechenden Auswahlbild die Erfüllung erster und/oder zweiter Eignungskriterien zugeschrieben werden.

Die zeitliche Abweichung eines Prüfbildzeitstempel von einem Auswahlbildzeitstempel, innerhalb derer die Prüfbilddaten den jeweiligen Auswahlbilddaten zugeordnet werden, ist vorzugsweise kleiner als die Bildwiederholfrequenz, mit der die erste und/oder zweite Folge von digitalen Bildern aufgenommen wird, äußerst vorzugsweise kleiner als die Hälfte der Bildwiederholfrequenz. Ist die Bildwiederholfrequenz beispielsweise 20 Bilder pro Sekunde, weicht der Prüfbildzeitstempel von dem Auswahlbildzeitstempel vorzugsweise weniger als 1/20 Sekunde, äußerst vorzugsweise weniger als 1/40 Sekunde ab.

Die Auswahlauflösung, mit der die Auswahlbilddaten gespeichert werden, kann kleiner als die Aufnahmeauflösung sein. In bevorzugten Ausführungen des Verfahrens kann die Auswahlauflösung der Aufnahmeauflösung entsprechen. Somit kann vorteilhaft eine verfügbare Auflösung eines Bildsensors der Bildaufnahmevorrichtung ausgeschöpft werden.

In bevorzugten Ausführungen des Verfahrens kann das Aufnehmen der Folge von digitalen Bildern der Person und das Speichern von jeweiligen Prüfbilddaten und Auswahlbilddaten nach dem Bestimmen eines einem Auswahlbild zugeordneten Prüfbildes, das ersten Eignungskriterien genügt, zumindest zeitweise fortgesetzt werden. Erfüllt das jeweilige Auswahlbild z.B. bei einer nachfolgenden Bestimmung der Erfüllung zweiter Eignungskriterien nicht eine notwendige Teilmenge der Eignungskriterien, stehen somit ohne Verzögerung weitere Bilddaten zur Verfügung, aus denen erneut ein zweites digitales Bild ausgewählt werden kann.

Vorzugsweise kann das Aufnehmen der Folge von Bildern der Person beendet werden, wenn das digitale biometrische Bild erzeugt und/oder ausgegeben wurde. Auf diese Weise wird sichergestellt, dass die ansonsten für die Bildaufnahme und Speicherung benötigten Rechnerressourcen im Weiteren zur Verfügung stehen.

In Weiterbildungen des erfindungsgemäßen Verfahrens kann das digitale biometrische Bild an eine Personalisierungseinrichtung übertragen werden, die eingerichtet ist, die Bilddaten zur Aufbringung auf einem Datenträger eines Sicherheitsdokuments zu verarbeiten. Die Verarbeitung kann insbesondere derart erfolgen, dass eine Repräsentation des digitalen biometrischen Bildes auf einem Dokumentenkörper für ein Sicherheitsdokument aufgebracht wird. Die Übertragung kann über ein Computernetzwerk erfolgen, um z.B. ein in einem Bürgeramt erstelltes digitales biometrisches Bild an eine räumlich entfernte Fertigungsstätte für Sicherheits- und/oder Wertdokumente senden zu können.

In bevorzugten Ausführungsformen des Verfahrens kann eine das Empfangen von Prüfbilddaten und/oder Aufnahmebilddaten und/oder das Bestimmen der Erfüllung von ersten und/oder zweiten Eignungskriterien von Prüfbilddaten und/oder Aufnahmebilddaten umfassende Programmschleife vorgesehen sein, wobei eine Bedingung für das Verlassen der Schleife ist, dass die Prüfbilddaten erste und/oder zweite Eignungskriterien erfüllen. Somit wird das Erzeugen und/oder Bestimmen von Bilddaten für ein digitales biometrisches Bild erst beendet, wenn geeignete Bilddaten bestimmt wurden.

Die ersten Eignungskriterien können insbesondere Eignungskriterien sein, bei deren Nichterfüllung wesentliche Änderungen der Aufnahmesituation erforderlich sind, um die Eignungskriterien zu erfüllen. Sie umfassen vorzugsweise eines oder mehrere der folgenden Eignungskriterien: Ausleuchtung des digitalen Bildes, Hintergrund des digitalen Bildes, Kopfposition, Lidstellung, Blickrichtung, Kopfbedeckung, Sitz einer Brille, Reflexion einer Brille, auf Manipulationen hinweisende Merkmale, Schärfe, Mundöffnung.

Die zweiten Eignungskriterien können insbesondere Eignungskriterien sein, bei deren Nichterfüllung Korrekturen mittels der Bilderzeugungsvorrichtung, z.B. Korrekturen der Beleuchtung und/oder des Weißabgleichs, und/oder durch geringfügige Änderungen der Position der Person, wie z.B. eine geänderte Lidstellung, eine Erfüllung der Eignungskriterien erreicht werden kann. Somit kann vorteilhaft bei Nichterfüllung von nur zweiten Eignungskriterien unmittelbar mit der Speicherung von Aufnahmebilddaten fortgefahren werden, um die Zeitspanne bis zur Erzeugung des digitalen biometrischen Bildes verkürzt werden.

Die zweiten Eignungskriterien gemäß alternativen Ausführungen die Konformität mit dem ICAO-Standard betreffen. Es kann mittels der zweiten Eignungskriterien geprüft werden, ob die digitalen Bilddaten ein digitales biometrisches Bild repräsentieren, welches dem ICAO-Standard für Bilder für maschinenlesbare Sicherheitsdokumente genügt.

In Weiterbildungen eines erfindungsgemäßen Verfahrens kann aus den Prüfbilddaten ein nicht geeignetes digitales Bild bestimmt werden, für welches die zugeordneten Bilddaten die notwendige Teilmenge der ersten und/oder zweiten Eignungskriterien nicht erfüllen, wobei hierauf wenigstens einer der folgenden Schritte vorgesehen ist:
- Erzeugen von Steuerdaten als Reaktion auf das Feststellen eines Fehlers, dahingehend, dass bei dem nicht geeigneten digitalen Bild eines der ersten und/oder zweiten Eignungskriterien nicht erfüllt ist, wobei
- die Steuerdaten eingerichtet sind, eine Ausgabe über eine Ausgabeeinrichtung an die Person zu steuern, und
- mit der Ausgabe ein Benutzerhinweis zum Beheben des Fehlers an die Person ausgegeben wird; und/oder
- Erzeugen von weiteren Steuerdaten als Reaktion auf das Feststellen eines weiteren Fehlers, dahingehend, dass bei dem nicht geeigneten Bild ein weiteres der ersten Eignungskriterien nicht erfüllt ist, wobei die weiteren Steuerdaten eingerichtet sind, einen Betriebsparameter der Bildaufnahmevorrichtung und/oder einer der Bildaufnahmevorrichtung zugeordneten Beleuchtungseinrichtung für das Aufnehmen der Folge von digitalen Bildern zu ändern.

Mit diesen zusätzlichen Schritten kann erreicht werden, dass eine effiziente Korrektur der Bilderzeugung in Richtung einer Erfüllung der Eignungskriterien erfolgt.

Die Folge von digitalen Bildern kann mittels der Bildaufnahmevorrichtung als Serienbildaufnahme aufgenommen werden, indem innerhalb kurzer Zeit eine Vielzahl von Bildern aufgenommen wird. Insbesondere können 10 oder mehr Bilder je Sekunde aufgenommen werden.

In besonders bevorzugten Ausführungen der Erfindung erfolgt die Aufnahme von Bildern mittels einer Videobildaufnahme. Die Videobildaufnahme kann mit einer Bildwiederholfrequenz von 10 oder mehr Bildern je Sekunde, in bevorzugten Ausführungsformen mit bis zu 30 Bildern je Sekunde ausgeführt werden. Auf diese Weise können auch Bewegungen der Person ausgewertet werden, um zum Beispiel die Aufnahmebereitschaft der Person zu bewerten oder die richtige Augenlidposition für ein biometrisches Bild vorherzubestimmen.

Ein erfindungsgemäßes Verfahren zum Personalisieren eines Sicherheitsdokuments, umfasst gemäß einem ersten Aspekt die Schritte:
- Erzeugen von Bilddaten, die ein digitales biometrisches Bild repräsentieren, gemäß einem Verfahren nach mindestens einem der vorangehenden Ansprüche;
- Bereitstellen der Bilddaten in einer Personalisierungseinrichtung;
- Bereitstellen eines Sicherheitsdokuments; und
- Personalisieren des Sicherheitsdokuments, wobei hierbei die Bilddaten in der Personalisierungseinrichtung verarbeitet werden und eine Repräsentation des digitalen biometrischen Bildes auf dem Sicherheitsdokument aufgebracht wird.

Mit einer direkten Verbindung zur Personalisierungseinrichtung lassen sich die Bilddaten idealerweise zumindest größtenteils automatisiert für die Personalisierung verarbeiten.

Vorzugsweise kann zum Aufbringen des digitalen biometrischen Bildes auf das Sicherheitsdokument ein biometrisches Bild aufgedruckt werden und / oder die Bilddaten können in einem elektronischen Speicherelement des Sicherheitsdokuments gespeichert werden.

Des Weiteren wird die Aufgabe gelöst durch eine Vorrichtung, die eingerichtet und ausgelegt ist, das erfindungsgemäße Verfahren durchzuführen. Die Vorrichtung kann insbesondere ein Computer sein, der einen Prozessor umfasst. Der Computer kann zudem einen Speicher zum Speichern von Bilddaten aufweisen.

Des Weiteren wird die Aufgabe gelöst durch ein Computerprogrammprodukt umfassend Befehle, die bei der Ausführung durch eine Datenverarbeitungsvorrichtung, insbesondere der genannten Vorrichtung, diese veranlassen, die Verfahrensschritte des erfindungsgemäßen Verfahrens auszuführen.

Des Weiteren wird die Aufgabe gelöst durch eine Bilderzeugungsvorrichtung zum Bestimmen von Bilddaten, die ein digitales biometrisches Bild für ein Sicherheitsdokument repräsentieren, die neben einer Bildaufnahmevorrichtung die oben genannte Vorrichtung aufweist, die für Folgendes eingerichtet ist:
- Empfangen einer Folge von ersten digitalen Bildern einer Person mittels der Bildaufnahmevorrichtung, wobei die ersten digitalen Bilder als Aufnahmebilddaten mit einer Aufnahmeauflösung empfangen werden;
- Speichern der Aufnahmebilddaten für die ersten digitalen Bilder als Prüfbilddaten mit einer gegenüber der Aufnahmeauflösung verminderten Auflösung;
- Auswählen der Prüfbilddaten von ersten digitalen Bildern;
- Prüfen der Prüfbilddaten nach ersten Eignungskriterien hinsichtlich der Eignung für ein digitales biometrisches Bild;
- sobald ein Prüfbild wenigstens einer vorbestimmten Teilmenge erster Eignungskriterien genügt, empfangen einer Folge von zweiten digitalen Bildern der Person mittels der Bildaufnahmevorrichtung in der Aufnahmeauflösung;
- Speichern der Aufnahmebilddaten für die zweiten digitalen Bilder als Prüfbilddaten mit der Prüfauflösung sowie
- Speichern der Aufnahmebilddaten für die zweiten digitalen Bilder als Auswahlbilddaten mit einer Auswahlauflösung, wobei die Auswahlauflösung höher als die Prüfauflösung ist;
- Auswählen eines zweiten digitalen Bildes der zweiten Folge von digitalen Bildern
- Bestimmen, ob die Prüfbilddaten, welche dem ausgewählten zweiten digitalen Bild zugeordnet sind, die ersten Eignungskriterien erfüllen.

Die Bildaufnahmevorrichtung kann als digitale Kamera ausgestaltet sein, insbesondere als Videokamera. Die Bildaufnahmevorrichtung kann einen Kamerasensor mit der Aufnahmeauflösung aufweisen. Die Aufnahmeauflösung kann größer als die Auswahlauflösung sein oder dieser entsprechen.

Die Bildaufnahmevorrichtung kann gemäß weiteren Ausführungsformen ausgestaltet sein, statische und/oder bewegte Bilder über eine Schnittstelle zu übermitteln und/oder auf einem Speichermedium aufzuzeichnen. Gemäß einer bevorzugten Ausführungsform der Erfindung kann die Bildaufnahmeeinrichtung mit einem elektronischen Bildsensor versehen sein. Vorzugsweise weist die Bildaufnahmeeinrichtung außerdem ein wenigstens eine Linse umfassendes Objektiv auf, welche zu erfassende Bilder auf den jeweiligen elektronischen Sensor projiziert.

Weitere Vorteile und Einzelheiten der Erfindung werden beispielhaft anhand der in den schematischen Figuren dargestellten Ausführungsbeispielen näher erläutert. Hierbei zeigt:
- Fig. 1: eine schematische Darstellung einer Anordnung zum Bestimmen von Bilddaten für ein digitales biometrisches Bild, die mit einer Personalisierungseinrichtung verbunden ist;
- Fig. 2: eine schematische Blockdarstellung einer ersten Variante eines erfindungsgemäßen Verfahrens zum Bestimmen von Bilddaten für ein digitales biometrisches Bild; und
- Fig. 3: eine schematische Blockdarstellung einer zweiten Variante eines erfindungsgemäßen Verfahrens zum Bestimmen von Bilddaten für ein digitales biometrisches Bild.

Im Folgenden werden beispielhafte Ausführungsformen der Erfindung mit Bezugnahme auf die Figuren beschrieben, wobei gleiche Bezugszeichen sich auf gleiche Elemente beziehen. Es versteht sich, dass auch andere Ausführungsformen erstellt und Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele auch in anderer Weise miteinander kombiniert werden können, sofern nicht etwas anderes angegeben ist.

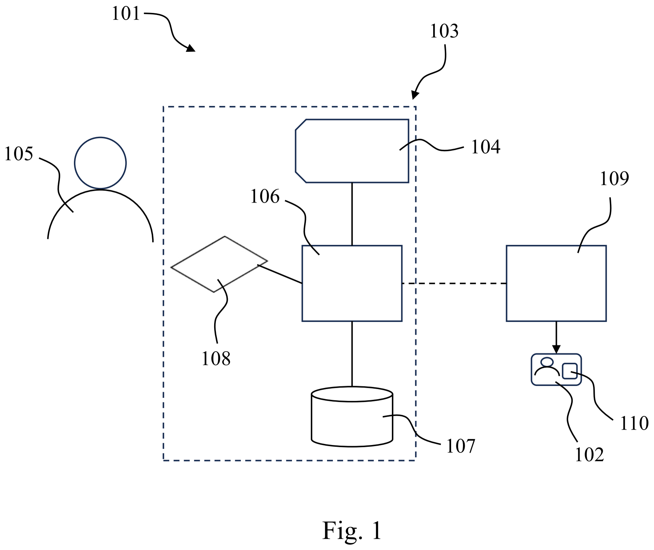

Fig. 1 zeigt eine schematische Darstellung einer Anordnung 101 zum Erzeugen von Bilddaten für ein digitales biometrisches Bild für die Personalisierung eines Sicherheitsdokumentes 102.

Zum Bestimmen von Bilddaten für ein digitales biometrisches Bild ist eine Bilderzeugungsvorrichtung 103 vorgesehen. Die Bilderzeugungsvorrichtung 103 umfasst zum Empfangen von digitalen Bildern eine Bildaufnahmevorrichtung 104, die in diesem Ausführungsbeispiel als Videobildaufnahmevorrichtung ausgestaltet ist und zum Beispiel von einer Videobildkamera gebildet sein kann.

Mittels der Bildaufnahmevorrichtung 104 werden Portrait- und/oder Gesichtsbilder einer Person 105 im Rahmen einer Videobildaufnahme aufgenommen. Mit Hilfe einer Datenverarbeitungseinrichtung 106, die mit der Bildaufnahmevorrichtung 104 verbunden ist, werden die in dem Bilddatenstrom mit einer Bildwiederholfrequenz enthaltenen Bilder in einer Speichereinrichtung 107 als digitale Bilddaten abgelegt. Hierbei werden Bilddaten zunächst mit einer gegenüber einer der Aufnahmeauflösung der Bildaufnahmevorrichtung 104, welche der Bildauflösung beim Aufnehmen der Bilder im Rahmen der Videobildaufnahme entspricht, verminderten Prüfauflösung gespeichert. Die Speichereinrichtung kann dazu einen Direktzugriffspeicher (RAM) aufweisen, in welchem Bilddaten für die Weiterverarbeitung zwischengespeichert werden können.

Während das Bestimmen der Bilddaten des digitalen biometrischen Bildes ausgeführt wird, kann das Aufnehmen der Bilder mittels Videoaufnahme fortgeführt werden, so dass fortdauernd neue Bilddaten bereitgestellt werden, auf die beim Bestimmen der Bilddaten zurückgegriffen werden kann. Das Aufnehmen der Bilder kann zumindest so lange fortgeführt werden, bis zumindest für eines der Bilder aus der Videobildaufnahme bestimmt wird, dass die ersten Eignungskriterien bezüglich der Eignung für das digitale biometrische Bild erfüllt sind.

Wird beim Prüfen der Bilddaten hinsichtlich der ersten Eignungskriterien wenigstens eine Nichterfüllung eines Eignungskriteriums festgestellt, können hierauf in der Bilderzeugungsvorrichtung 103 Steuerdaten erzeugt werden, um das weitere Aufnehmen von Bildern zur Erfüllung des Eignungskriteriums zu beeinflussen. Beispielsweise kann die Person 105 aufgefordert werden, ihre Position zu ändern. In einer Ausgestaltung kann dazu vorgesehen sein, dass die Steuerdaten eingerichtet sind, eine Ausgabe über eine Ausgabeeinrichtung 108 an die Person 105 zu steuern. Die Ausgabe kann über visuelle und/oder akustische Hinweise erfolgen.

Die Ausgabeeinrichtung 108 kann eine Anzeige umfassen, insbesondere einen Bildschirm, mittels dem ein Benutzerhinweis zum Beheben des Fehlers an die Person 105 ausgegeben wird. Beispielsweise kann eine Aufforderung angezeigt werden, den Kopf zu drehen, eine Kopfbedeckung abzunehmen, die Blickrichtung zu ändern und/oder Gesichtsbereiche verdeckende Haare zur Seite zu legen. Die Ausgabeeinrichtung 108, welche zum Beispiel von einem Display gebildet sein kann, kann insbesondere in die Bilderzeugungsvorrichtung 103 integriert sein. Vorzugsweise ist die Ausgabeeinrichtung 108 derart gestaltet, dass die Person 105 die Anzeige in Aufnahmebereitschaft, d.h. mit Blick in die Kamera sehen kann.

Alternativ oder zusätzlich kann die Ausgabeeinrichtung 108 zum Empfangen von Benutzereingaben eine Eingabefunktion aufweisen. Beispielsweise kann die Ausgabeeinrichtung 108 von einem Touchscreen gebildet sein.

Gemäß einer Ausführung des erfindungsgemäßen Verfahrens kann das digitale biometrische Bild an eine Personalisierungseinrichtung 109 übertragen werden, die eingerichtet ist, die Bilddaten zur Aufbringung auf einem Datenträger eines Wert- und/oder Sicherheitsdokuments 102 zu verarbeiten, insbesondere derart, dass eine Repräsentation des digitalen biometrischen Bildes auf einem Dokumentenkörper für ein Wert- und/oder Sicherheitsdokument 102 aufgebracht wird.

Die ausgewählten Auswahlbilddaten können für die Personalisierung eines Sicherheitsdokumentes 102 an eine Personalisierungseinrichtung 109 übertragen werden, welche eingerichtet ist, das Sicherheitsdokument 102 zu personalisieren. Die Personalisierungseinrichtung 109 kann für einen Datenaustausch über ein Netzwerk mit der Datenverarbeitungseinrichtung 106 verbunden sein. Die Personalisierungseinrichtung 109 kann eine zusätzliche Datenverarbeitungseinrichtung aufweisen, die eingerichtet ist, von der Bilderzeugungsvorrichtung 103 empfangene Bilder anhand von Attributen einem bestimmten Sicherheitsdokument 102 zuzuordnen.

Zur Personalisierung von Wert- und/oder Sicherheitsdokumenten kann die Personalisierungseinrichtung 109 mit einer Druckeinrichtung ausgeführt sein, mittels der das biometrische Bild auf dem Sicherheitsdokument 102 aufgedruckt wird. Alternativ oder ergänzend kann vorgesehen sein, die Bilddaten in einer Speichereinrichtung 110 des Sicherheitsdokuments 102 abzulegen, die beispielsweise als Speicherchip ausgestaltet sein kann.

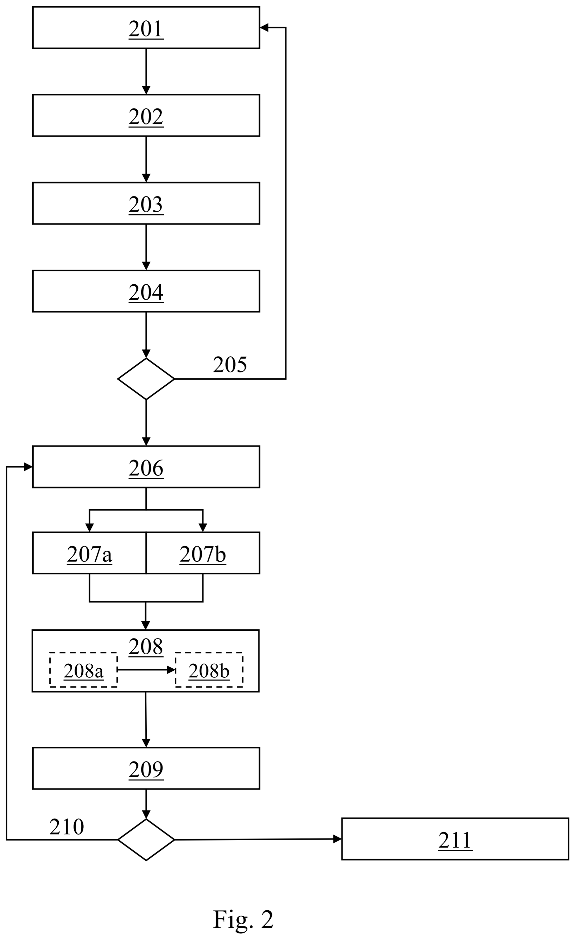

Fig. 2 zeigt eine schematische Blockdarstellung eines Verfahrens zum Erzeugen der Bilddaten, wobei ein Block einen Verfahrensschritt darstellt.

Zunächst wird mittels der Bildaufnahmevorrichtung eine Folge von ersten digitalen Bildern einer Person aufgenommen, wobei die ersten digitalen Bilder als Aufnahmebilddaten mit einer Aufnahmeauflösung empfangen werden, Schritt 201. Die Aufnahme kann eine Serienbildaufnahme sein. Bevorzugt wird eine Videobildaufnahme ausgeführt, mit einer Bildwiederholfrequenz zwischen 10 und 30 Bildern pro Sekunde.

Im Schritt 202 folgt das Speichern der ersten digitalen Bilder als Prüfbilddaten mit einer gegenüber der Aufnahmeauflösung verminderten Prüfauflösung in der Speichereinrichtung 107. Die Prüfbilddaten können entsprechend Prüfbilder bilden. Die Prüfbilddaten werden bevorzugt mit einem Zeitstempel gespeichert, um eine Zuordnung von Prüfbilddaten zu den entsprechenden Aufnahmebilddaten zu erleichtern.

Diese Prüfung der ersten digitalen Bilder wird nun mit der verminderten Auflösung ausgeführt. Dazu werden Prüfbilddaten von ersten digitalen Bildern ausgewählt, 203. Die Auswahl kann z.B. anhand des Zeitstempels der gespeicherten Prüfbilddaten erfolgen.

Die Prüfbilddaten werden nach ersten Eignungskriterien auf ihre Eignung für ein digitales biometrisches Bild hin geprüft, 204. Die ersten Eignungskriterien können Eignungskriterien aus der folgenden Gruppe umfassen: Ausleuchtung des digitalen Bildes, Hintergrund des digitalen Bildes, Bildkontrast, Kopfposition, Lidstellung, Blickrichtung, Kopfbedeckung, Sitz einer Brille, Reflexion einer Brille. Werden von den Prüfbilddaten wenigstens eines digitalen Bildes nicht zumindest zwingend notwendige Eignungskriterien erfüllt, wird die Aufnahme von ersten digitalen Bildern und die Speicherung von Prüfbilddaten fortgesetzt. Somit wird die mit Schritt 201 beginnende Schleife 205 wiederholt. Sobald ein Prüfbild bestimmt wurde, das wenigstens einer vorbestimmten Teilmenge erster Eignungskriterien genügt, erfolgt die Aufnahme weiterer Bilder. Es wird nun eine Folge von zweiten digitalen Bildern der Person mittels der Bildaufnahmevorrichtung in der Aufnahmeauflösung empfangen, 206.

Die mit der Folge von zweiten digitalen Bildern empfangenen Aufnahmebilddaten werden wie zuvor die Folge von zweiten digitalen Bildern als Prüfbilddaten mit der Prüfauflösung gespeichert, 207a, und nun zusätzlich als Auswahlbilddaten mit einer Auswahlauflösung, 207b, wobei die Auswahlauflösung höher als die Prüfauflösung ist. Dabei kann die Auswahlauflösung insbesondere der Aufnahmeauflösung entsprechen.

Es wird nun ein zweites digitales Bild ausgewählt, 208. Dies geschieht vorzugsweise, indem zu dem zweiten digitalen Bild der weiteren Folge von digitalen Bildern zunächst die Auswahlbilddaten ausgewählt werden, 208a. Dies kann z.B. anhand des Zeitstempels erfolgen. Insbesondere erst anschließend erfolgt die Bestimmung der zugehörigen Prüfbilddaten, 208b. Auf diese Weise wird sichergestellt, dass die Auswahlbilddaten vorhanden sind. Die Prüfbilddaten zu jeweiligen Auswahlbilddaten können anhand des Zeitstempels bestimmt werden. Die Zuordnung der Prüfbilddaten zu den Auswahlbilddaten kann erfolgen, wenn der Zeitstempel der Prüfbilddaten dem Zeitstempel der Auswahlbilddaten entspricht oder die Abweichung des Zeitstempels der Prüfbilddaten gegenüber des Zeitstempels der Auswahlbilddaten innerhalb eines vorbestimmten Toleranzbereiches liegt. Mit den zugehörigen Prüfbilddaten wird anschließend bestimmt, ob das ausgewählte zweite digitale Bild die ersten Eignungskriterien erfüllt, 209.

Wenn die Prüfbilddaten, welche dem ausgewählten zweiten digitalen Bild zugeordnet sind, nicht eine notwendige Teilmenge der ersten Eignungskriterien erfüllen, wird in einer weiteren Schleife 210 das Empfangen zweiter digitaler Bilder fortgesetzt, indem mit Schritt 206 fortgefahren wird. Sobald die Prüfbilddaten wenigstens eine notwendige Teilmenge der ersten Eignungskriterien erfüllen, kann mit der Erstellung und/oder Ausgabe eines digitalen biometrischen Bildes in der Auswahlauflösung fortgefahren werden, 211.

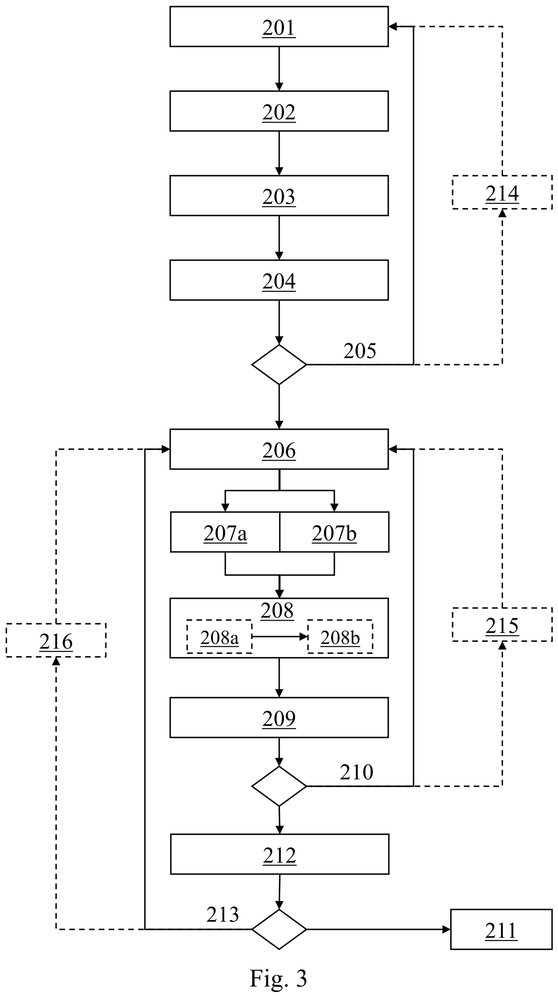

Figur 3 zeigt eine erfindungsgemäße Weiterbildung des Verfahrens der Figur 2. Sobald Prüfbilddaten, welche dem ausgewählten zweiten digitalen Bild zugeordnet sind, wenigstens eine notwendige Teilmenge der ersten Eignungskriterien erfüllen, wird ein zusätzlicher, zweiter Prüfschritt 212 durchgeführt. Im Schritt 212 wird bestimmt, ob die Prüfbilddaten auch zweite Eignungskriterien erfüllen, die von den ersten Eignungskriterien verschieden sind. Durch die zweistufige Prüfung kann die Prüfung nach zweiten Eignungskriterien übersprungen werden, wenn erste Eignungskriterien nicht erfüllt sind. Somit ist der Ressourcenbedarf für die Prüfung vorteilhaft reduziert, insbesondere wenn erst nach einer Prüfung einer größeren Anzahl von digitalen Bildern mittels der Prüfbilddaten mit der Prüfung nach zweiten Eignungskriterien begonnen wird.

Die zweiten Eignungskriterien können einer Prüfung dienen, ob die Bilddaten ein digitales biometrisches Bild in Übereinstimmung mit dem ICAO-Standard für Bilder für maschinenlesbare Sicherheitsdokumente sind. Beispielsweise kann der Standard gemäß "Technical Report - Portrait Quality (Reference Facial Images for MRTD)" in der Version 1.0 aus April 2018 oder einer aktuelleren Fassung ausgeführt werden.

Alternativ oder zusätzlich können Eignungskriterien auf in der ISO 39794-5 definierten Anforderungen basieren. Daraus ergibt sich zum Beispiel, dass für gute Ergebnisse biometrischer Vergleichsalgorithmen für Gesicht und Iris die entsprechenden Kameraaufnahmen so frontal wie möglich erfolgen sollen. Zudem wird ein Mindestabstand zwischen Gesicht und Sensor (Kamera) von mindestens einem Meter gefordert.

Wenn die Prüfbilddaten, welche dem ausgewählten zweiten digitalen Bild zugeordnet sind, nicht eine notwendige Teilmenge der zweiten Eignungskriterien erfüllen, wird in einer weiteren Schleife 213 erneut mit Schritt 206, d.h. dem Empfangen zweiter digitaler Bilder fortgesetzt oder neu begonnen. Sobald die Prüfbilddaten wenigstens eine notwendige Teilmenge der ersten und/oder zweiten Eignungskriterien erfüllen, kann mit der Erstellung und/oder Ausgabe eines digitalen biometrischen Bildes, das eine biometrische Personenidentifizierung anhand von biometrischen Gesichtsmerkmalen ermöglicht, in der Auswahlauflösung fortgefahren werden, 211.

In weiteren Ausführungen des Erfindungsgemäßen Verfahrens können, sofern beim Prüfen der Bilddaten hinsichtlich der ersten und/oder der zweiten Eignungskriterien ein Fehler festgestellt wird, welcher die Nichterfüllung zumindest eines der Eignungskriterien anzeigt, hierauf in der Bilderzeugungsvorrichtung Steuerdaten erzeugt werden, um das weitere Aufnehmen von Bildern mittels Videoaufnahme zu beeinflussen, 214, 215, 216. Die Erzeugung von Steuerdaten als Teil der Schleife 205, 210 und/oder 213 ausgeführt werden, insbesondere, bevor erneut erste und/oder zweite digitale Bilder empfangen werden, s. gestrichelt dargestellte Schritte 214, 215, 216.

Es kann vorgesehen sein, dass die Steuerdaten eingerichtet sind, eine Ausgabe eines Benutzerhinweises über die Ausgabeeinrichtung an die Person auszugeben. Alternativ oder ergänzend können als Reaktion auf das Feststellen eines Fehlers Steuerdaten erzeugt werden, die eingerichtet sind, einen Betriebsparameter der Bildaufnahmevorrichtung und / oder einer dieser zugeordneten Beleuchtungseinrichtung für weitere Bilder im Rahmen der Bildaufnahme zu verbessern, beispielsweise für eine verbesserte Ausleuchtung der Bilder. Derartige Optimierungsprozesse können ausgeführt werden, bis für wenigstens eines der Bilder festgestellt wird, dass sowohl die ersten wie auch die zweiten Eignungskriterien erfüllt sind, so dass die Bilddaten für das digitale biometrische Bild erzeugt und/oder ausgegeben werden können. Auf das Feststellen von Fehlern im Rahmen der Prüfung der ersten Eignungskriterien wird auf den Prozess des Aufnehmens der Bilder mittels Videoaufnahme rückgekoppelt, um schließlich für das digitale biometrische Bild geeignete Bilddaten bereitzustellen.

### Bezugszeichenliste

- 101: Anordnung zum Bestimmen von Bilddaten
- 102: Sicherheitsdokument
- 103: Bilderzeugungsvorrichtung
- 104: Bildaufnahmevorrichtung
- 105: Person
- 106: Datenverarbeitungseinrichtung
- 107: Speichereinrichtung
- 108: Ausgabeeinrichtung
- 109: Personalisierungseinrichtung
- 110: Speichereinrichtung

- 201: Empfangen erster digitaler Bilder
- 202: Speichern von Prüfbilddaten
- 203: Auswahl der Prüfbilddaten erster digitaler Bilder
- 204: Prüfen der Prüfbilddaten nach ersten Eignungskriterien
- 205: Schleife zum Aufnehmen und Prüfen von ersten digitalen Bildern
- 206: Empfangen zweiter digitaler Bilder
- 207a: Speichern von Prüfbilddaten
- 207b: Speichern von Aufnahmebilddaten
- 208: Auswahl eines zweiten digitalen Bildes
- 209: Prüfen der Prüfbilddaten nach ersten Eignungskriterien
- 210: Schleife zum Aufnehmen und Prüfen von zweiten digitalen Bildern
- 211: Erstellung und/oder Ausgabe eines digitalen biometrischen Bildes
- 212: Prüfen der Prüfbilddaten nach zweiten Eignungskriterien
- 213: Schleife zum Aufnehmen und Prüfen von zweiten digitalen Bildern
- 214: Erzeugen von Steuerdaten
- 215: Erzeugen von Steuerdaten
- 216: Erzeugen von Steuerdaten

## Patentansprüche

1. Computerimplementiertes Verfahren zum Erzeugen von Bilddaten für ein digitales biometrisches Bild, insbesondere für ein Passbild für ein Sicherheits- und/oder Wertdokument (102), umfassend:
a) Empfangen einer Folge von ersten digitalen Bildern (201) einer Person (105) mittels einer Bildaufnahmevorrichtung (104), wobei die ersten digitalen Bilder als Aufnahmebilddaten mit einer Aufnahmeauflösung empfangen werden;
b) Speichern der Aufnahmebilddaten für die ersten digitalen Bilder als Prüfbilddaten (202) mit einer gegenüber der Aufnahmeauflösung verminderten Prüfauflösung;
c) Auswählen der Prüfbilddaten von ersten digitalen Bildern (203);
d) Bestimmen, ob die Prüfbilddaten, welche dem ausgewählten ersten digitalen Bild zugeordnet sind, erste Eignungskriterien erfüllen (204);
e) sobald ein Prüfbild wenigstens einer vorbestimmten Teilmenge der ersten Eignungskriterien genügt, empfangen einer Folge von zweiten digitalen Bildern (206) der Person (105) mittels der Bildaufnahmevorrichtung (104) in der Aufnahmeauflösung;
f) Speichern der Aufnahmebilddaten für die zweiten digitalen Bilder als Prüfbilddaten mit der Prüfauflösung (207a);
g) Speichern der Aufnahmebilddaten für die zweiten digitalen Bilder als Auswahlbilddaten mit einer Auswahlauflösung (207b), wobei die Auswahlauflösung höher als die Prüfauflösung ist;
h) Auswählen eines zweiten digitalen Bildes der zweiten Folge von digitalen Bildern (208);
i) Bestimmen, ob die Prüfbilddaten, welche dem ausgewählten zweiten digitalen Bild zugeordnet sind, die ersten Eignungskriterien erfüllen (209).

2. Verfahren nach Anspruch 1, wobei die Auswahl des zweiten digitalen Bildes (208) anhand der Auswahlbilddaten erfolgt und anschließend die dem ausgewählten zweiten digitalen Bild zugehörigen Prüfbilddaten bestimmt werden.

3. Verfahren nach einem der obigen Ansprüche, wobei wenn die Prüfbilddaten, welche dem ausgewählten zweiten digitalen Bild zugeordnet sind, wenigstens eine notwendige Teilmenge der ersten Eignungskriterien erfüllen, erzeugen und/oder Ausgabe der Daten für das digitale biometrische Bild (211) mit der Auswahlauflösung.

4. Verfahren nach einem der obigen Ansprüche, wobei wenn die Prüfbilddaten, welche dem ausgewählten zweiten digitalen Bild zugeordnet sind, wenigstens eine notwendige Teilmenge der ersten Eignungskriterien erfüllen, bestimmen, ob die Prüfbilddaten, welche dem ausgewählten zweiten digitalen Bild zugeordnet sind, zweite Eignungskriterien erfüllen, die von den ersten Eignungskriterien verschieden sind (212), sowie wenn die Prüfbilddaten zumindest eine notwendige Teilmenge der zweiten Eignungskriterien erfüllen, erzeugen und/oder Ausgabe der Daten für das digitale biometrische Bild mit der Auswahlauflösung (211).

5. Verfahren nach einem der obigen Ansprüche, wobei wenn keine dem ausgewählten zweiten digitalen Bild zugehörigen Prüfbilddaten bestimmbar sind, ein weiteres zweites digitales Bild der zweiten Folge von digitalen Bildern anhand der Auswahlbilddaten ausgewählt und/oder empfangen wird.

6. Verfahren nach einem der obigen Ansprüche, wobei die Prüfbilder mit einem Prüfbildzeitstempel und die Auswahlbilder jeweils mit einem Auswahlbildzeitstempel versehen werden, und das einem Auswahlbild zugeordnete Prüfbild bestimmt wird, indem die Prüfbildzeitstempel verfügbarer Prüfbilder mit dem Auswahlbildzeitstempel des Auswahlbildes verglichen und ein dem Auswahlbildzeitstempel entsprechender und/oder innerhalb eines Abweichungsbereiches vom Auswahlzeitstempel liegender Prüfbildzeitstempel bestimmt wird.

7. Verfahren nach einem der obigen Ansprüche, wobei das Empfangen der Folge von ersten und/oder zweiten digitalen Bildern (201, 206) der Person (105) und/oder das Speichern von jeweiligen Prüfbilddaten und Auswahlbilddaten nach dem Bestimmen eines einem Auswahlbild zugeordneten Prüfbildes, das ersten Eignungskriterien genügt, zumindest zeitweise fortgesetzt wird.

8. Verfahren nach einem der obigen Ansprüche, wobei wenn die Prüfbilddaten des gespeicherten Auswahlbildes wenigstens ein notwendiges erstes Eignungskriterium nicht erfüllen, die Schritte a) bis d) von Anspruch 1 erneut ausgeführt werden.

9. Verfahren nach einem der obigen Ansprüche, wobei wenn die Prüfbilddaten des gespeicherten Auswahlbildes wenigstens ein notwendiges zweites Eignungskriterium nicht erfüllen, zumindest die Schritte e) bis i) von Anspruch 1 erneut ausgeführt werden.

10. Verfahren nach einem der vorangehenden Ansprüche, wobei die ersten Eignungskriterien eines oder mehrere der folgenden Eignungskriterien umfassen: Ausleuchtung des digitalen Bildes, Hintergrund des digitalen Bildes, Bildkontrast, Kopfposition, Lidstellung, Blickrichtung, Kopfbedeckung, Sitz einer Brille, Reflexion einer Brille, auf Manipulationen hinweisende Merkmale, Schärfe, Mundöffnung.

11. Verfahren nach einem der vorangehenden Ansprüche, wobei aus den Prüfbilddaten ein nicht geeignetes digitales Bild bestimmt wird, für welches die zugeordneten Prüfbilddaten die notwendige Teilmenge der ersten Eignungskriterien nicht erfüllen, wobei hierauf wenigstens einer der folgenden Schritte vorgesehen ist:
- Erzeugen von Steuerdaten (214, 215, 216) als Reaktion auf das Feststellen eines Fehlers, dahingehend, dass bei dem nicht geeigneten digitalen Bild eines der ersten Eignungskriterien nicht erfüllt ist, wobei
- die Steuerdaten eingerichtet sind, eine Ausgabe über eine Ausgabeeinrichtung (108) an die Person (105) zu steuern, und
- mit der Ausgabe ein Benutzerhinweis zum Beheben des Fehlers an die Person (105) ausgegeben wird; und/oder
- Erzeugen von weiteren Steuerdaten (214, 215, 216) als Reaktion auf das Feststellen eines weiteren Fehlers, dahingehend, dass bei dem nicht geeigneten Bild ein weiteres der ersten Eignungskriterien nicht erfüllt ist, wobei die weiteren Steuerdaten eingerichtet sind, einen Betriebsparameter der Bildaufnahmevorrichtung (104) und/oder einer der Bildaufnahmevorrichtung (104) zugeordneten Beleuchtungseinrichtung für das Aufnehmen der Folge von digitalen Bildern zu ändern.

12. Verfahren nach einem der vorangehenden Ansprüche, wobei die Folge von digitalen Bildern mit einer Videobildaufnahme mit einer Bildwiederholfrequenz zwischen etwa 10 Bildern pro Sekunde und etwa 30 Bildern pro Sekunde aufgenommen werden.

13. Vorrichtung, insbesondere ein Computer, eingerichtet und ausgelegt, das Verfahren nach einem der Ansprüche 1 bis 12 durchzuführen.

14. Computerprogrammprodukt umfassend Befehle, die bei der Ausführung durch eine Datenverarbeitungsvorrichtung, insbesondere die Vorrichtung nach Anspruch 13, diese veranlassen, die Verfahrensschritte nach mindestens einem der Ansprüche 1 bis 12 auszuführen.

15. Bilderzeugungsvorrichtung (103) zum Bestimmen von Bilddaten, die ein digitales biometrisches Bild für ein Wert- und/oder Sicherheitsdokument repräsentieren, umfassend eine Bildaufnahmevorrichtung sowie eine Vorrichtung nach Anspruch 13, die für Folgendes eingerichtet ist:
a) Empfangen einer Folge von ersten digitalen Bildern (201) einer Person (105) mittels der Bildaufnahmevorrichtung (104), wobei die ersten digitalen Bilder als Aufnahmebilddaten mit einer Aufnahmeauflösung empfangen werden;
b) Speichern der Aufnahmebilddaten für die ersten digitalen Bilder als Prüfbilddaten (202) mit einer gegenüber der Aufnahmeauflösung verminderten Prüfauflösung;
c) Auswählen der Prüfbilddaten von ersten digitalen Bildern (203);
d) Bestimmen, ob die Prüfbilddaten, welche dem ausgewählten ersten digitalen Bild zugeordnet sind, erste Eignungskriterien erfüllen (204);
e) sobald ein Prüfbild wenigstens einer vorbestimmten Teilmenge der ersten Eignungskriterien genügt, empfangen einer Folge von zweiten digitalen Bildern (206) der Person (105) mittels der Bildaufnahmevorrichtung (104) in der Aufnahmeauflösung;
f) Speichern der Aufnahmebilddaten für die zweiten digitalen Bilder als Prüfbilddaten mit der Prüfauflösung (207a);
g) Speichern der Aufnahmebilddaten für die zweiten digitalen Bilder als Auswahlbilddaten mit einer Auswahlauflösung (207b), wobei die Auswahlauflösung höher als die Prüfauflösung ist;
h) Auswählen eines zweiten digitalen Bildes der zweiten Folge von digitalen Bildern (208);
i) Bestimmen, ob die Prüfbilddaten, welche dem ausgewählten zweiten digitalen Bild zugeordnet sind, die ersten Eignungskriterien erfüllen (209).
